# EUROPÄISCHE PATENTSCHRIFT

(11) **EP 0 610 692 B1**
(45) Veröffentlichungstag und Bekanntmachung des Hinweises auf die Patenterteilung: **02.01.1997**
(21) Anmeldenummer: 94100753.6
(22) Anmeldetag: 20.01.1994
(51) Int. Cl.: B61D 27/00, B60H 1/00

(54) **Verfahren und Vorrichtung zur Regulierung von Frischluftmengen in Hochgeschwindigkeitszügen**
Method and device for controlling the rate of fresh air in high speed trains
Procédé et dispositif pour le contrôle du débit d'air de ventilation dans les trains à grand vitesse

(30) Priorität: 12.02.1993 DE 4304194
(43) Veröffentlichungstag der Anmeldung: 17.08.1994
(73) Patentinhaber: HAGENUK FAHRZEUGKLIMA GmbH, D-04435 Schkeuditz (DE)
(72) Erfinder: Riedel, Hans Jochen, D-04159 Leipzig (DE); Schmerler, Michael, D-06116 Halle/Saale (DE)
(74) Vertreter: Köckeritz, Günter

(56) Entgegenhaltungen:
- EP-A- 0 051 831
- EP-A- 0 498 554
- DE-A- 2 633 243
- DE-A- 3 618 292
- GB-A- 2 254 139

## Beschreibung

Die Erfindung betrifft ein Verfahren und eine Vorrichtung zum Regulieren von Frischluftmengen in Hochgeschwindigkeitszügen mit Hilfe von Druckwellenventilen.
Es sind Druckwellenventile der verschiedensten Ausführungen bekannt, die eingesetzt werden, um bei Auftreten von unzulässig hohen Druckdifferenzen zwischen dem Innenraum von Fahrzeugen und der Umgebung für eine bestimmte Zeit zu schließen, um unzulässige Druckänderungen im Innenraum zu vermeiden. Dabei wurden die verschiedensten Einrichtungen zum Detektieren der Druckveränderungen untersucht und eingesetzt. Eine solche Einrichtung ist aus der DE-PS 36 18 292 bekannt. Nachteilig ist, daß alle bisher bekannten Einrichtungen eine vollkommene Schließung oder Öffnung des Druckwellenventils bewirken.

Aufgabe der Erfindung ist es, ein Verfahren und eine Vorrichtung zu entwickeln, die bekannte Druckwellenventile in Hochgeschwindigkeitszügen dahingehend verbessern, daß eine kontrollierte Frischluftregulierung ermöglicht wird.

Erfindungsgemäß wird die Aufgabe dadurch gelöst, daß aus Passagieranzahl und Außentemperatur ein Signal zur Einstellung einer Antriebseinheit ermittelt wird. Diese bringt eine Anschlaggabel in eine Klappenanschlagsposition des Ventils in Betriebsart "Öffnen", wodurch die Zufuhr der erforderlichen Frischluftmenge ermöglicht wird.

Mit dem erfindungsgemäßen Verfahren treten erhebliche Energieeinsparungen ein, da nur die unbedingt notwendige Frischluftmenge geheizt oder gekühlt werden muß und der Zeitraum verlängert wird, in dem statt gekühlt, belüftet werden kann.
Nach einem bevorzugten Merkmal der Erfindung wird über eine Regeleinheit eine kontinuierliche Überprüfung der Aktualität des Einstellsignals für die Antriebseinheit vorgenommen. Dadurch wird sichergestellt, daß bei Veränderung der Faktoren für die Regulierung der Frischluftmenge, wie Außentemperatur oder Passagieranzahl, umgehend eine Änderung der Klappenanschlagsposition des Ventils erfolgen kann.

Nach einem weiteren Merkmal der Erfindung kann die erforderliche Frischluftmenge neben den Parametern Personenbesetzung und Außentemperatur auch über weitere, der Energieeinsparung zuträgliche Faktoren bestimmt werden.

Die Aufgabe der Erfindung wird weiterhin durch eine Vorrichtung gelöst, bei der die Ventilklappe des Druckwellenventils neben der Antriebseinheit zum Öffnen und Schließen eine weitere Antriebseinheit aufweist, welche mit einer Anschlaggabel für die Klappe verbunden ist.
Diese weitere Antriebseinheit weist nach einem bevorzugten Merkmal der Erfindung eine Regeleinheit auf, die mit Sensoren verbunden ist.
Die Regeleinheit dient dazu, diese Sensoren in bestimmten Zeitabständen nach der Aktualität der Parameter abzufragen, nach welchen die Klappenanschlagsposition des Ventils eingestellt wurde, wie beispielsweise Außentemperatur und Personenbesetzung.

In der Zeichnung ist ein Ausführungsbeispiel der Erfindung dargestellt, das im folgenden näher beschrieben wird.

Es zeigen:
- Fig. 1: Anordnung der Druckwellenventile in einem Reisezugwaggon
- Fig. 2: Anordnung der erfindungsgemäßen Vorrichtung

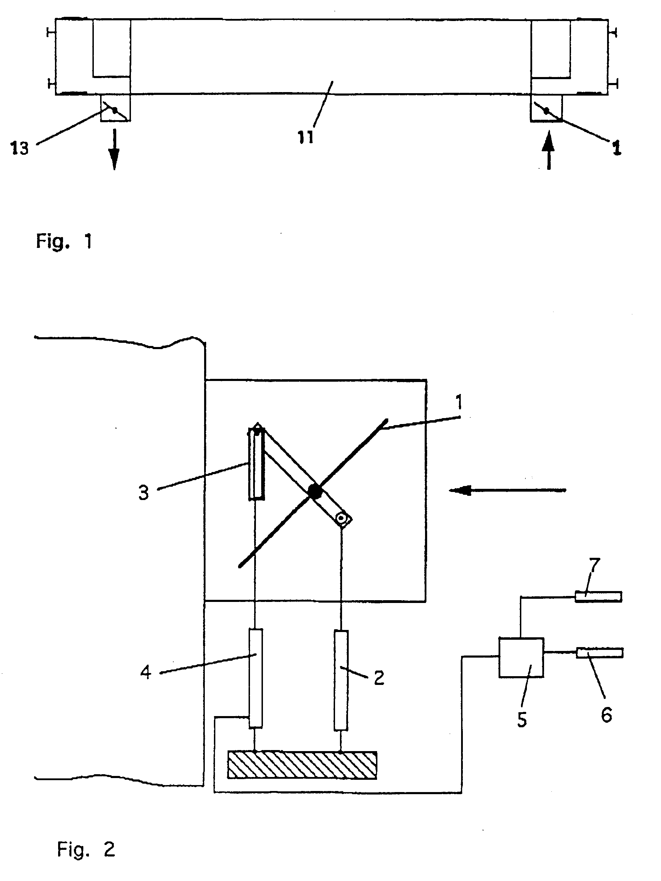

Die Anordnung der Druckwellenventile in der Fig. 1 schematisch dargestellt. Dabei stellt die Klappe 1 das Druckwellenventil für die Frischluftzuführung und die Klappe 13 das für die Abluftführung dar. Beide Druckwellenventile sind am Wagenkörper 11 an geeigneter Stelle angeordnet. Die Frischluft und die Umluft werden in bekannter Art und Weise als Mischluft in einem wageninternen Gerät aufbereitet. Diese Luft wird den Passagieren zugeführt. Ein Teil der Luft entweicht als Abluft über das Druckwellenventil 13.
Die Funktion der Einrichtung zur Regulierung der Frischluftmengen mit Hilfe des Druckwellenventils soll mit Hilfe der Fig. 2 beschrieben werden. Der Luftstrom wird mit Hilfe der Klappe 1 eingestellt. Auf diese Klappe wirken durch ein geeignetes Gestänge zwei Stelleinrichtungen 4 und 2. Die pneumatische Einrichtung 2 wird mit einer dem heutigen Stand der Technik üblichen und in diesem Fall nicht dargestellten Druckauswerteeinheit angesteuert. Diese Druckauswerteeinheit registriert den äußeren und den Wageninnendruck sowie den Druckgradienten bei wachsenden Druckunterschieden zwischen innen und außen. Als Signal gibt die Auswerteeinheit einen Befehl an die Stelleinrichtung 2. Diese wird entsprechend veranlaßt zu öffnen bzw. zu schließen.

Zusätzlich kommt zu dieser bekannten Anordnung eine zweite Stelleinrichtung 4 hinzu, welche unabhängig von der Stelleinrichtung 2 bei geöffnetem Zustand des Druckwellenventils die Lage der Klappe 1 in einer bestimmten Stellung positioniert. Die Stelleinrichtung 4 verschiebt eine Anschlaggabel 3 so, daß die Klappe 1 beim Öffnungsvorgang durch die Stelleinrichtung 2 gegen den Anschlag der Gabel 3 gedrückt wird. Die Positionierung der Anschlaggabel 3 wird mittels Steuerimpulsen von der Steuereinheit 5 auf die Stelleinrichtung 4 bewirkt. Diese Steuereinheit 5 verarbeitet Signale des Außentemperatursensors 7 und des Personenzählsensors 6. Aufgrund des Signales von Sensor 7 wird die Luftmenge je Passagier angepaßt. Die Personenzahl wird z. B. durch die Wagenfederung, eine Sitzplatzbelegung oder andere geeignete Methoden zur Feststellung der Wagenbesetzung mittels Sensor 6 ermittelt. Aus diesen Signalen ermittelt die Auswerteeinheit das Steuersignal für den Stellantrieb 4. Über eine entsprechende Rückführung vom Stellantrieb 4 zur Steuereinheit 5 wird ein Positionsabgleich erzielt. Die Steuereinheit 5 fragt die beiden Sensoren 6 und 7 in bestimmten Zeiteinheiten, z. B. 5 Min., ab und ermittelt im Bedarfsfall eine neue Positionierung für die Stelleinrichtung 4.

## Patentansprüche

1. Verfahren zum Regulieren der Frischluftmengen in Hochgeschwindigkeitszügen mittels Druckwellenventilen,
dadurch gekennzeichnet, daß
aus Passagieranzahl und Außentemperatur ein Signal zur Einstellung einer Antriebseinheit (4) ermittelt wird, wonach die Antriebseinheit (4) eine Anschlaggabel (3) in eine Klappenanschlagposition des Ventils in Betriebsart "Öffnen" bringt, welche die erforderliche Frischluftmenge sicherstellt.

2. Verfahren nach Anspruch 1, dadurch gekennzeichnet, daß über eine Regeleinheit eine kontinuierliche Überprüfung der Aktualität des Einstellsignals für die Antriebseinheit (4) vorgenommen wird.

3. Verfahren nach den Ansprüchen 1 und 2,
dadurch gekennzeichnet, daß
die erforderlichen Frischluftmengen neben den Parametern Personenbesetzung und Außentemperatur auch über weitere, der Energieeinsparung zuträgliche Faktoren bestimmt wird.

4. Vorrichtung zum Regulieren der Frischluftmengen in Hochgeschwindigkeitszügen mittels Druckwellenventilen, zur Durchführung des Verfahrens nach Anspruch 1, dadurch gekennzeichnet, daß
die Ventilklappe (1) des Druckwellenventils neben einer Antriebseinheit (2) zum Öffnen und Schließen eine zusätzliche Antriebseinheit (4) aufweist, welche mit einer Anschlaggabel (3) für die Klappe (1) verbunden ist.

5. Vorrichtung nach Anspruch 4,
dadurch gekennzeichnet, daß
die Antriebseinheit (4) eine Regeleinheit (5) aufweist, die mit den Sensoren (6) und (7) verbunden ist.

## Claims

1. Method of controlling the quantities of fresh air in high-speed trains by means of pressure wave valves, characterised in that a signal for adjusting a drive unit (4) is determined from the number of passengers and the external temperature, whereupon the drive unit (4) brings a bifurcated stop member (3) into a flap stop position of the valve in the "opening" type of operation, which ensures the required quantity of fresh air.

2. Method according to claim 1, characterised in that the actual presence of the adjustment signal for the drive unit (4) is continuously checked by a control unit.

3. Method according to claims 1 and 2, characterised in that, in addition to the parameters in respect of passenger occupation and external temperature, the required quantities of fresh air are also determined by additional factors which are advantageous for the saving of energy.

4. Apparatus for controlling the quantities of fresh air in high-speed trains by means of pressure wave valves, for accomplishing the method according to claim 1, characterised in that, in addition to having a drive unit (2) for opening and closing purposes, the valve flap (1) of the pressure wave valve has an additional drive unit (4) which is connected to a bifurcated stop member (3) for the flap (1).

5. Apparatus according to claim 4, characterised in that the drive unit (4) has a control unit (5), which is connected to the sensors (6) and (7).

## Revendications

1. Procédé pour la régulation des quantités d'air frais dans les trains à grande vitesse à l'aide de soupapes à onde de pression,
caractérisé en ce qu'on détermine, à partir du nombre de passagers et de la température extérieure, un signal destiné à régler une unité d'entraînement (4), après quoi l'unité d'entraînement (4) amène une fourche de butée (3) dans une position de butée de clapet de la soupape, en mode "ouverture", laquelle position garantit la quantité d'air frais nécessaire.

2. Procédé selon la revendication 1, caractérisé en ce qu'un contrôle continu de l'actualité du signal de réglage pour l'unité d'entraînement (4) est effectué par l'intermédiaire d'une unité de régulation.

3. Procédé selon les revendications 1 et 2, caractérisé en ce que les quantités d'air frais nécessaires sont déterminées non seulement grâce aux paramètres constitués par le nombre de personnes et la température extérieure, mais aussi grâce à d'autres facteurs utiles pour économiser de l'énergie.

4. Dispositif pour la régulation des quantités d'air frais dans les trains à grande vitesse à l'aide de soupapes à onde de pression, pour la mise en oeuvre du procédé selon la revendication 1, caractérisé en ce que le clapet (1) de la soupape à onde de pression comporte, en plus d'une unité d'entraînement (2) pour l'ouverture et la fermeture, une unité d'entraînement supplémentaire (4) qui est reliée à une fourche de butée (3) prévue pour le clapet (1).

5. Dispositif selon la revendication 4, caractérisé en ce que l'unité d'entraînement (4) comporte une unité de régulation (5) qui est reliée aux détecteurs (6) et (7).
